# EUROPEAN PATENT APPLICATION

(11) **EP 4 282 719 A1**
(43) Date of publication of application: **29.11.2023**
(21) Application number: 23150938.1
(22) Date of filing: 10.01.2023
(51) Int. Cl.: B60T 7/20, B62B 5/00, B62B 5/04, B60D 1/00

(54) **TRASPORT TRAILER, IN PARTICULAR OF PRODUCTS, ITEMS OR PARCELS**

(30) Priority: 11.01.2022 IT 202200000068 U
(71) Applicant: BETT SISTEMI s.r.l., 41012 Carpi (Modena) (IT)
(72) Inventor: BETTATI, Tienno, 41012 CARPI (MO) (IT)
(74) Representative: Fanzini, Valeriano

(57) **Abstract**

A trailer (10) for the transport, in particular of products, items or parcels, especially usable inside industrial, logistics settings and/or settings for the transfer of parcels, such as airports or the like, comprises support means, or frame (12), means, or wheels, (14), respectively front (141, 141) and rear (142, 142), for sliding said trailer (10) on a corresponding resting and running surface of the same trailer (10), means (16) for the connection between said sliding means, or wheels (14) and said support means, or frame (12), in particular adapted to allow the same sliding means, or wheels, (14) to swivel, or freely rotate, with respect to a corresponding axis, and preferably including means (161), which can be activated and deactivated, for braking said means, or wheels (14), and means (18) for towing said trailer (10), preferably including corresponding means (181) for coupling the same trailer (10) to a corresponding vehicle or tow means. Said means (181) for coupling the trailer (10) to a corresponding vehicle or tow means are operatively connected to said means (161) for braking said means, or wheels (14), so that in the respective, in particular lowered, position for the engagement and coupling with said tow vehicle, they deactivate, and/or which are adapted to prevent the activation of, the same means (161) for braking said means, or wheels (14).

## Description

The present invention relates to a transport trailer, in particular, of products, items or parcels.

Trailers for the transport of products, items or parcels, especially usable inside industrial, logistics settings and/or settings for the transfer of parcels, such as airports or the like, are known, which trailers generally comprise support means, or frame, front and rear means, or wheels, respectively, for sliding said trailer on a corresponding resting and running surface of the same trailer, means for the connection between said sliding means, or wheels, and said support means, or frame, including means, which can be activated and deactivated, for braking said means, or wheels, and means for towing said trailer, including corresponding means for coupling the trailer to a corresponding vehicle or tow means, which are movable between a lifted position for the disengagement from said vehicle or tow means and a lowered position for the engagement and coupling to said vehicle or tow means.

This kind of already-known trailers usually has a problem related to the activation of the wheels brake. In fact, the brake is usually located on each of the respective wheels, which, since they are swivelling, do not always have the lever for activating or deactivating the same brake in a comfortable position for activating or deactivating the brake.

This results in a difficulty in activating or deactivating the brake, i.e., in an activation or deactivation of the brake only on same wheels, at the most only on a single wheel of the trailer. However, the partial activation of a braking action on same wheels of the trailer may create problems of effectiveness of such action, i.e., of stability of the parking position of the trailer, at least under such conditions where the resting surface is not fully planar and horizontal.

A further problem that is felt relative to these trailers of an already known type is the fact that there is a not infrequent risk of towing a trailer that inadvertently has its wheels in a still blocked condition, with a resulting sliding thereof on the resting and running surface, and consequent wear of said wheels and the corresponding need to replace them prematurely, and corresponding damage to those companies using the same trailer.

A further problem that is felt relative to these trailers of an already known type is the fact that the loading of the products, items or parcels, which can be of the most varied shapes and sizes, could be problematic or suboptimal for some types of said products, items or parcels.

Furthermore, the need is felt in the industry to have trailers that are constructively essential and have a use of constituent materials that is definitely reduced.

Therefore, with the present invention it is desired to propose a new, alternative solution to the solutions known so far, and in particular it is proposed to obviate one or more of the drawbacks or problems referred to above and/or to meet one or more of the needs referred to above, and/or however felt in the art, and in particular deducible from the above.

Therefore, a transport trailer is provided, in particular of products, items or parcels, especially usable inside industrial, logistics settings and/or settings for the transfer of parcels, such as airports or the like; comprising support means, or frame, front and rear means, or wheels, respectively, for sliding said trailer on a corresponding resting and running surface of the same trailer, in particular said sliding means, or wheels, comprising at least one pair of front wheels and a pair of rear wheels, means for the connection between said sliding means, or wheels, and said support means, or frame, in particular adapted to allow the same sliding means, or wheels, to swivel, or freely rotate, with respect to a corresponding, especially vertical, axis and preferably including means, which can be activated and deactivated, for braking said means, or wheels, i.e., for blocking the rotation thereof on, or with respect to, the resting and running surface, and means for towing said trailer; the trailer being characterized in that means for towing said trailer include corresponding means for coupling the trailer to a corresponding vehicle or tow means; said means for coupling the trailer to a corresponding vehicle or tow means being movable between a position, in particular a lifted position, for the disengagement from said vehicle or tow means and a position, in particular a lowered position, for the engagement and coupling with said vehicle or tow means; and in that said means for coupling the trailer to a corresponding vehicle or tow means are operatively connected to said means for braking said means, or wheels, so that in the respective, in particular lowered, position, for the engagement and coupling with said tow vehicle, they deactivate the, and/or which are adapted to prevent the activation of, the same means for braking said means, or wheels.

In this manner, it is avoided to tow a trailer which inadvertently has blocked wheels, with resulting sliding thereof on the resting and running surface, and consequent wearing of said wheels and corresponding need to replace them prematurely, with a relative economic damage for those companies that use the same trailer.

This and other novel aspects, or respective advantageous implementations, are however set forth in the attached claims, the specific technical characteristics of which can be found, together with corresponding advantages achieved, in the following description, illustrating in detail a merely exemplary, non-limiting embodiment of the invention, and which is made with reference to the attached drawings, in which:
- Fig. 1 illustrates a perspective, schematic view of a preferred implementation of a trailer according to the present invention;
- Fig. 2 illustrates a perspective, schematic view, taken on a different side that the one of Fig. 1, of the preferred implementation of a trailer according to the present invention;

- Fig. 3 illustrates a further perspective, schematic view of the preferred implementation of a trailer according to the present invention;

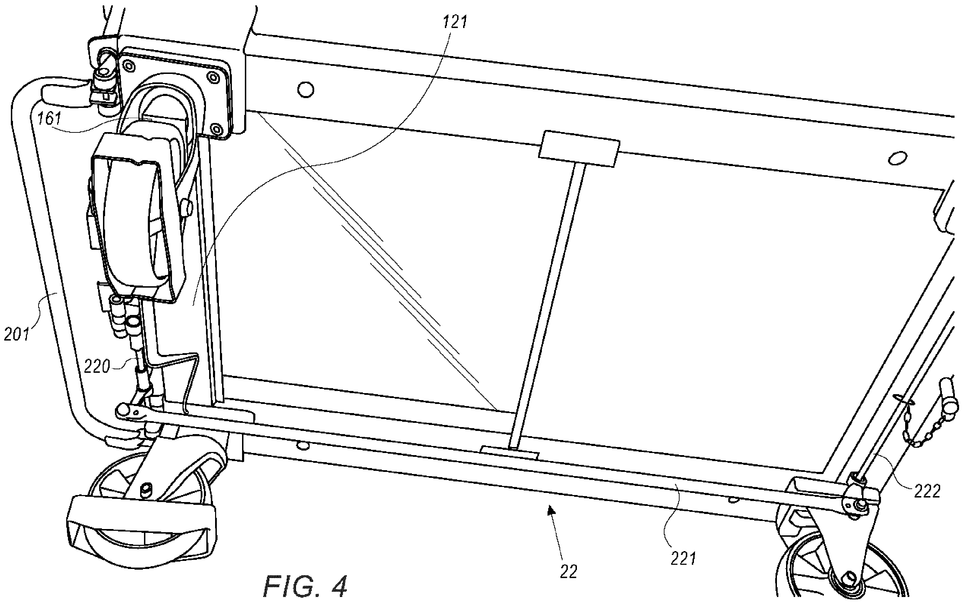

- Fig. 4 illustrates a perspective, schematic view of the underside of the preferred implementation of a trailer according to the present invention;

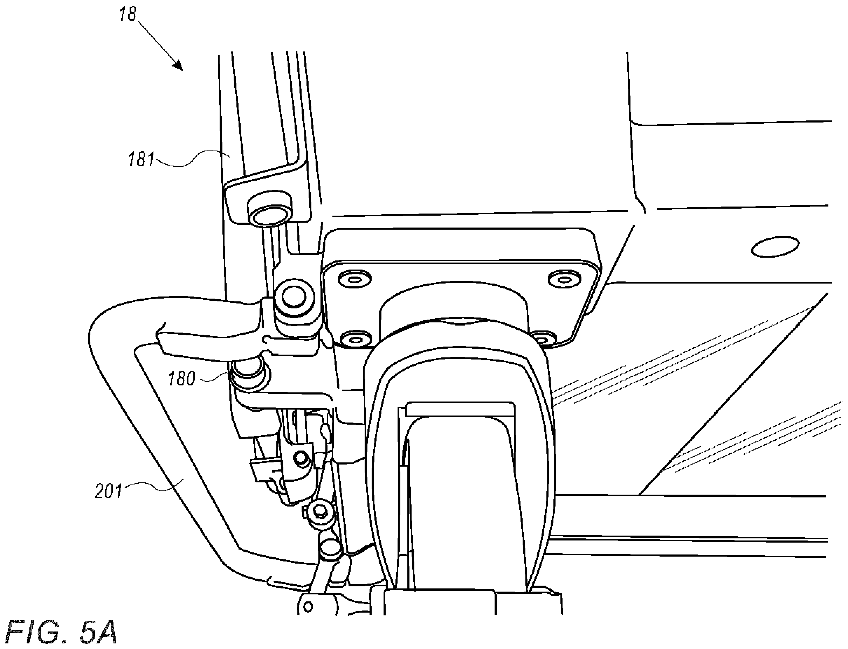

- Fig. 5A illustrates a perspective, schematic view, of an enlarged detail of the preferred implementation of a trailer according to the present invention, in the condition of lifted brake lever and non-activated brake;

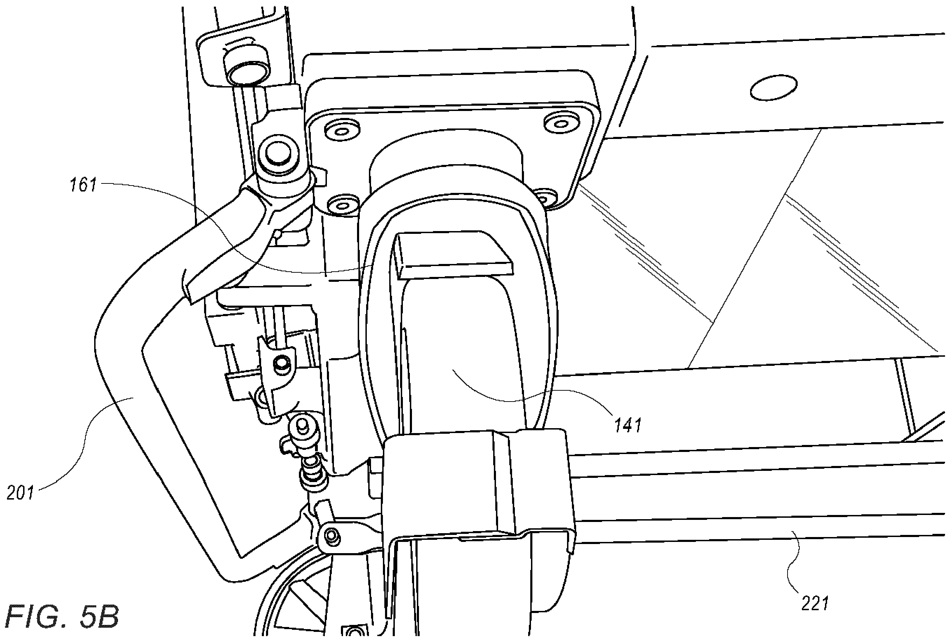

- Fig. 5B illustrates a perspective, schematic view, of the enlarged detail of Fig. 5A of the preferred implementation of a trailer according to the present invention, in the condition of lowered brake lever and activated brake;

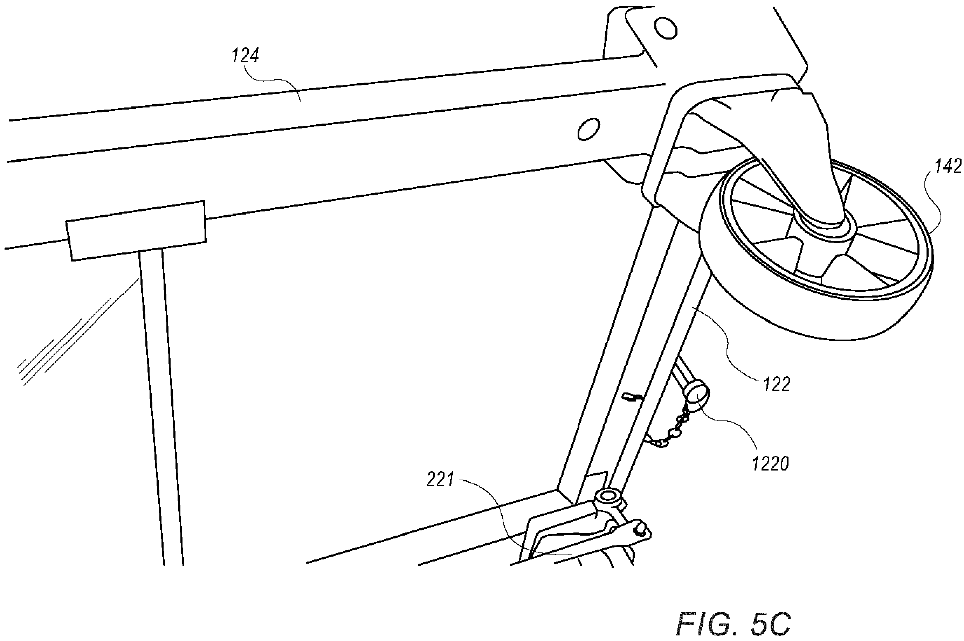

- Fig. 5C illustrates a perspective, schematic view, of the enlarged detail of the lower and read side of the preferred implementation of a trailer according to the present invention, in the condition of activated brake;
- Fig. 6A illustrates a perspective, schematic view, of another enlarged detail of the preferred implementation of a trailer according to the present invention, in the condition of activated brake and lifted coupling rudder;
- Fig. 6B illustrates a perspective, schematic view, of an enlarged detail of the preferred implementation of a trailer according to the present invention, in the condition of activated brake and of start of the rotating movement for lowering said means, or rudder, for coupling the trailer to corresponding tow means;
- Fig. 6C illustrates a perspective, schematic view, of an enlarged detail of the preferred implementation of a trailer according to the present invention, in a condition of lowered coupling rudder and deactivated wheels brake;
- Fig. 6D illustrates a perspective, schematic view, of an enlarged detail of the preferred implementation of a trailer according to the present invention, in a condition of lowered coupling rudder and resulting prevention of the reactivation of the brake.

In the attached figures, a preferred implementation of transport trailer 10 is illustrated, which in particular can be employed for the transport of products, items or parcels; and especially which can be used inside industrial, logistics settings and/or settings for the transfer of parcels, such as airports or the like.

As illustrated, the trailer 10 comprises support means, or frame 12, preferably defining, or having, a front side 12a, a rear side 12b, and opposite flank sides 12c, 12d.

As illustrated, the trailer 10 further comprises front and rear means, or wheels, 14, respectively, for sliding said trailer 10 on a corresponding resting and running surface of the same trailer 10.

In particular, said sliding means, or wheels, 14 comprise at least one pair of front wheels 141, 141 and a pair of rear wheels 142, 142. Especially, each wheel being provided or arranged, as illustrated, at, or in the proximity of, the respective flank side 12c or 12d and/or preferably at, or in the proximity of, the respective front 12a or rear 12b side, of said support means, or frame 12.

As illustrated, the trailer 10 further comprises means 16 for the connection between said sliding means, or wheels, 14 and said support means, or frame 12, in particular adapted to allow the same sliding means, or wheels 14 to swivel, or freely rotate, with respect to a corresponding, especially vertical, axis and preferably including means 161, which can be activated and deactivated, for braking said means, or wheels, 14, i.e., for blocking the rotation thereof on, or with respect to, the resting and running surface.

Furthermore, as illustrated, the trailer 10 comprises means 18 for towing said trailer 10, preferably including corresponding means 181 for coupling the trailer 10 to a corresponding vehicle or tow means, for example, in the form of a further trailer 10' or other.

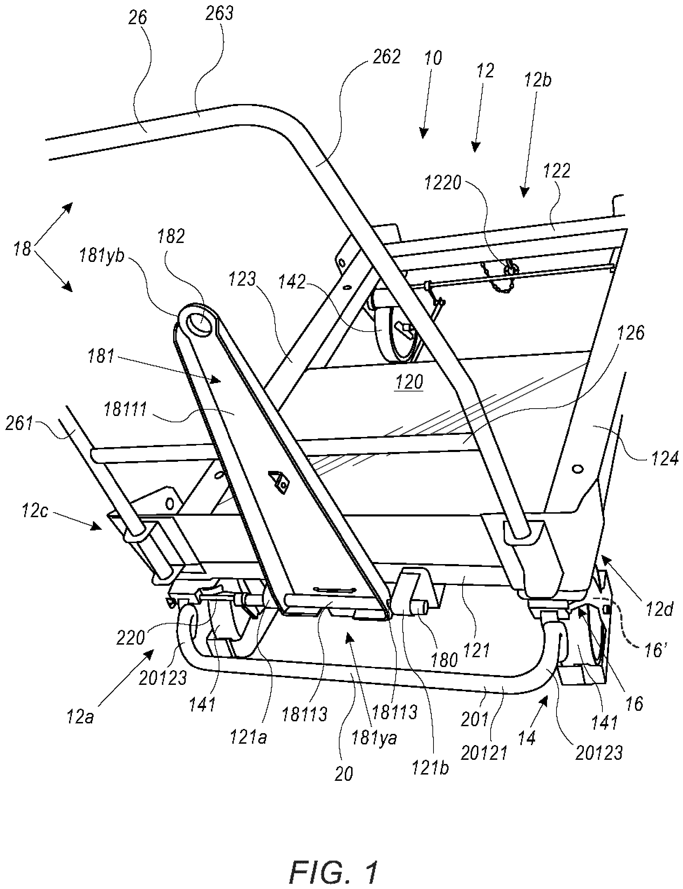

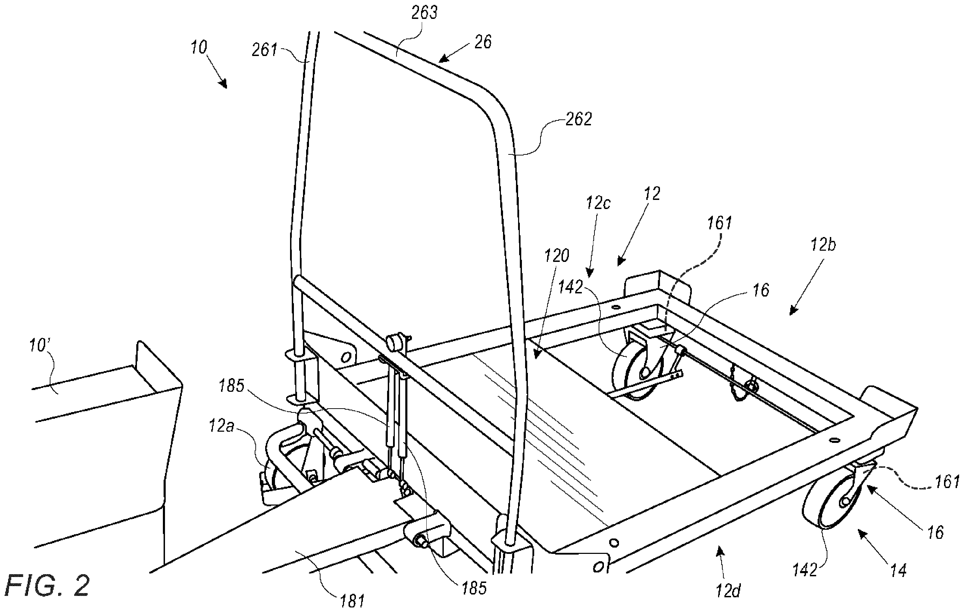

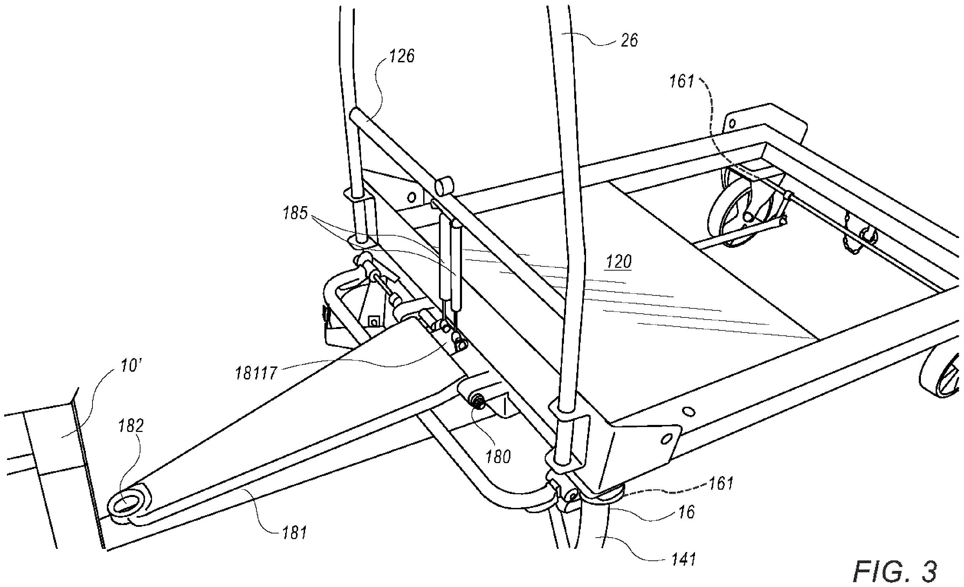

As can be seen from the figures, said means 181 for coupling the trailer 10 to a corresponding vehicle or tow means are movable between a position, in particular a lifted position, for the disengagement from said vehicle or tow means, illustrated in figure 1, and a position, in particular a lowered position, for the engagement and coupling with said vehicle or tow means illustrated in the subsequent figures 2 and 3.

With advantage, it is provided for that said means 181 for coupling the trailer 10 to a corresponding vehicle or tow means are operatively connected to said means 161 for braking said means, or wheels, 14, so that in the respective, in particular lowered, position, for the engagement and coupling with said tow vehicle, the same means 181 for coupling the trailer 10 deactivate, and/or are adapted to prevent the activation of, the same means 161 for braking said means, or wheels, 14.

In this manner, it is avoided to tow a trailer which inadvertently has blocked wheels, with resulting sliding thereof on the resting and running surface, and consequent wearing of said wheels and corresponding need to replace them prematurely, with a resulting damage to those companies that use the same trailer.

Advantageously, as can be seen from said figures, said means 181 for coupling the trailer 10 to a corresponding vehicle or tow means are adapted to allow the activation of the same means 161 for braking said means, or wheels, 14, i.e., are operatively connected to said means 161 for braking said means, or wheels, 14, so that, in the respective, in particular lifted, position for the disengagement from said vehicle or tow means, they allow the activation of the same means 161 for braking said means, or wheels, 14.

As can be seen from said figures, in an appreciably advantageous manner, said support means, or frame 12 define, or defines, a resting and support surface 120, in particular for said products, items and/or parcels, and/or comprise, or comprises, a front cross-beam 121, and preferably a rear cross-beam 122, and a first and a second longitudinally extending side spars, 123, 124, between which said front and rear cross-beams 121, 122 extend, and especially to which they are joined, preferentially welded.

In an advantageous manner, as can be seen from said figures, said means 181 for coupling the trailer 10 to a corresponding vehicle or tow means are connected in a tilting, or rotatable, manner, to said support means, or frame 12, in particular to said front cross-beam 121 thereof, and are rotatable with respect to a corresponding transversal or horizontal shaft 180, especially supported by corresponding projecting portions 121a, 121b extending anteriorly from said front cross-beam 121 of said support means, or frame 12.

Advantageously, as can be seen from said figures, said means 181 for coupling the trailer 10 to a corresponding vehicle or tow means are in the form of a corresponding coupling bar, or rudder 18111, in particular having an end 181 ya hinged to said support means, or frame 12 and a free end 181yb, preferably at which means for the coupling to the corresponding vehicle or tow means are provided, which, in particular, are in the form of a loop, or hole, especially perpendicularly through, 182, and which is preferentially adapted to the insertion on a corresponding pin 1220, preferably projecting inferiorly from said rear cross-beam 122 of the corresponding trailer 10, i.e., of another vehicle or tow means.

As can be seen from said figures, with appreciable advantage, said means 18 for coupling the trailer 10 to corresponding tow means, or to said coupling bar, or rudder 18111, have, or has, a transversal seat 18113 of insertion for said transversal, or horizontal, rotation shaft 180, which said transversal seat 18113 is in the proximity of the edge or rear end 181ya of the same coupling bar, or rudder 18111.

In a particularly advantageous manner, as can be seen from said figures and in particular from said Fig. 1, said means 18 for coupling the trailer 10 to corresponding tow means comprise means 185 which are adapted to normally push the same coupling means 181 into said, in particular lifted, position, disengaged from said vehicle or tow means.

Advantageously, as can be seen from said figures, said means 185 which are adapted to normally push the same coupling means 181 into said, in particular lifted, position, disengaged from said vehicle or tow means, are in the form of means that exert an elastic thrust and preferably comprise a first and a second elastic members, in particular transversally placed side by side to one another, especially in the form of gas spring means, i.e., in the form of a first and a second gas springs 185, 185, in particular transversally placed side by side, or parallel, to one another.

As can be seen from said figures, with advantage, said means 185 which are adapted to normally push the same coupling means 181 into said, in particular lifted, position, disengaged from said vehicle or tow means, extend between said means 181 for coupling the trailer 10 to a corresponding vehicle or tow means and said support means, or frame 12, in particular between a rear protrusion 18117 of said means 181 for coupling the trailer 10 to a corresponding vehicle or tow means, i.e., of said coupling bar, or rudder 18111, and a transversal member 126, in particular vertically lifted with respect to the resting and support surface 120, of said support means, or frame 12.

In an appreciably advantageous manner, as can be seen from the figures, said rear protrusion 18117 of said means 181 for coupling the trailer 10 to a corresponding vehicle or tow means is freely movable in the space between said rear end 181ya of said means 18 for coupling the trailer 10 to corresponding tow means, i.e., of said coupling bar, or rudder 18111, and the front face of said support means, or frame 12, i.e., of said front cross-beam 121 thereof.

Advantageously, as can be seen from said figures, means 20 for activating and/or deactivating the brake of the wheels 14 are provided for.

As can be seen from said figures, in an advantageous manner, said means 20 for activating and/or deactivating the brake of the wheels 14 act onto said pair of front wheels 141, 141, and in particular also onto said pair of rear wheels 142, 142.

With appreciable advantage, as can be seen from said figures, said means 20 for activating and/or deactivating the brake of the wheels 14 comprise a transversal bar 201, of engagement for the operator's foot, which extends between said pair of front wheels 141, 141, and preferably which substantially has the same width as said trailer 10.

In this manner, the operation to activate and deactivate the brake is made particularly easy to the operator.

Advantageously, as can be seen from the figures, said transversal bar 201 is at said front side 121 of said trailer 10.

In this manner, the operation to activate and deactivate the brake is made particularly easy to the operator.

As can be seen from the figures, in a particularly advantageous manner, said transversal bar 201, of engagement for the operator's foot, is rotatably supported by the corresponding front wheels 141, 141 and interacts with braking means 161 thereof.

With advantage, as can be seen from the figures, said transversal bar 201, of engagement for the operator's foot, has an elongated engagement portion 20121, from the ends of which, in particular transversal, 20123, 20123 corresponding, in particular perpendicular or substantially perpendicular, portions extend for a rotatable connection to the corresponding front wheels 141, 141, which interact with, or fit into, the actuating means, not particularly illustrated in the attached figures, of said means 161 for braking said means, or wheels, 14.

Advantageously, as can be seen from the figures, said means 20 for activating and/or deactivating the brake of the wheels 14 comprise means 22 for transmitting the action which activates or deactivates the braking, from said pair of front wheels 141, 141 to said pair of rear wheels 142, 142.

As can be seen from the figures, in an appreciably advantageous manner, said means 22 for transmitting the action which activates or deactivates the braking, from said pair of front wheels 141, 141 to said pair of rear wheels 142, 142, comprise a connecting rod 221, in particular longitudinally extending, preferably extending below said surface 120 for resting and supporting said support means, or frame 12.

In an advantageous manner, as can be seen from the figures, said connecting rod 221 rotates, and preferably is supported by, in particular inferiorly located to, a corresponding transversal rod 222, with fits with said means 16 for the connection between said sliding means, or wheels, 14 and said support means, or frame 12, of said pair of rear wheels 142, 142, and which is adapted to actuate the braking means 161 of the same rear wheels 142, 142.

Advantageously, as can be seen from said figures, said means 22 for transmitting the action which activates or deactivates the braking, from said pair of front wheels 141, 141 to said pair of rear wheels 142, 142, comprise operative connection means of said transversal bar 201, of engagement for the operator's foot, with said connecting rod 221.

As can be seen from said figures, with appreciable advantage, said means 22 for transmitting the action which activates or deactivates the braking, from said pair of front wheels 141, 141 to said pair of rear wheels 142, 142, comprise an actuation transversal rod 220, in particular for handling said connecting rod 221, which connecting rod 221 is preferably is supported by, in particular inferiorly located to, this same actuation transversal rod 220.

In a particularly advantageous manner, as can be seen from said figures, said means 22 for transmitting the action which activates or deactivates the braking, from said pair of front wheels 141, 141 to said pair of rear wheels 142, 142, comprise an actuation transversal rod 220 exiting one of, as illustrated, i.e., both means 16, for the connection between said sliding means, or wheels, 14 and said support means, or frame 12, of said pair of front wheels 141, 141, which said actuation transversal rod 220 is operatively connected, through said means 161 for braking said means, or wheels, 14, with said transversal bar 201, of engagement for the operator's foot, so as to rotate and transmit, in particular through said connecting rod 221, the activation and deactivation of the braking action to said means 161 for braking said means, or wheels, 14 of said pair of rear wheels 142, 142.

Advantageously, as can be seen from said figures, said actuation transversal rod 220 is rotatably supported by at least one corresponding protrusion 18117 of said support means, or frame 12, which supports in a freely rotatable manner said means 18 for coupling the trailer 10 to corresponding tow means, i.e., which supports in a freely rotatable manner said coupling bar, or rudder 18111.

As can be seen from said figures, in a particularly advantageous manner, said means 181 for coupling the trailer 10, to corresponding tow means, are hinged to said support means, or frame 12 in a front position with respect to said actuation transversal rod 220.

In an appreciably advantageous manner, as can be seen from said figures, means 24 which are adapted to deactivate and/or which are adapted to prevent the activation of said means 161 for braking said means, or wheels 14 are provided for.

Advantageously, as can be seen from said figures, said means 24 which are adapted to deactivate, and/or which are adapted to prevent the activation of said means 161 for braking said means, or wheels, 14, comprise means 241 for controlling, and/or maintaining, the deactivation of said means 161 for braking said means, or wheels, 14.

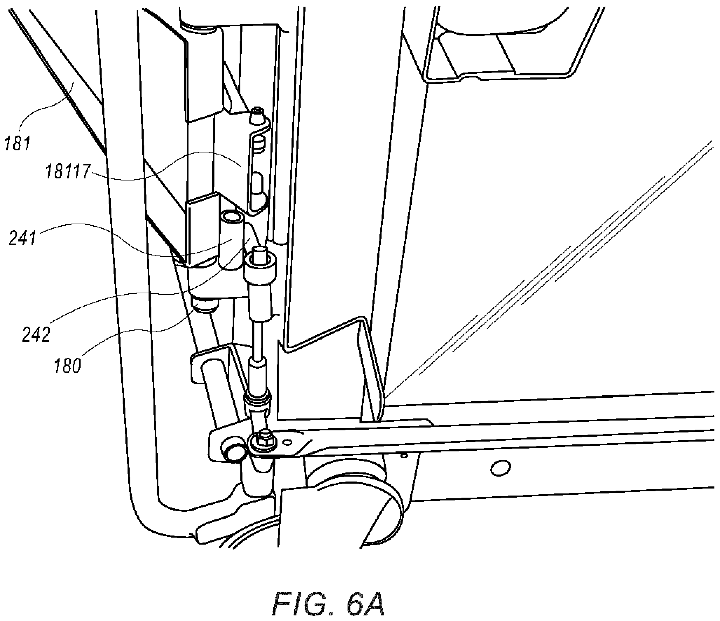

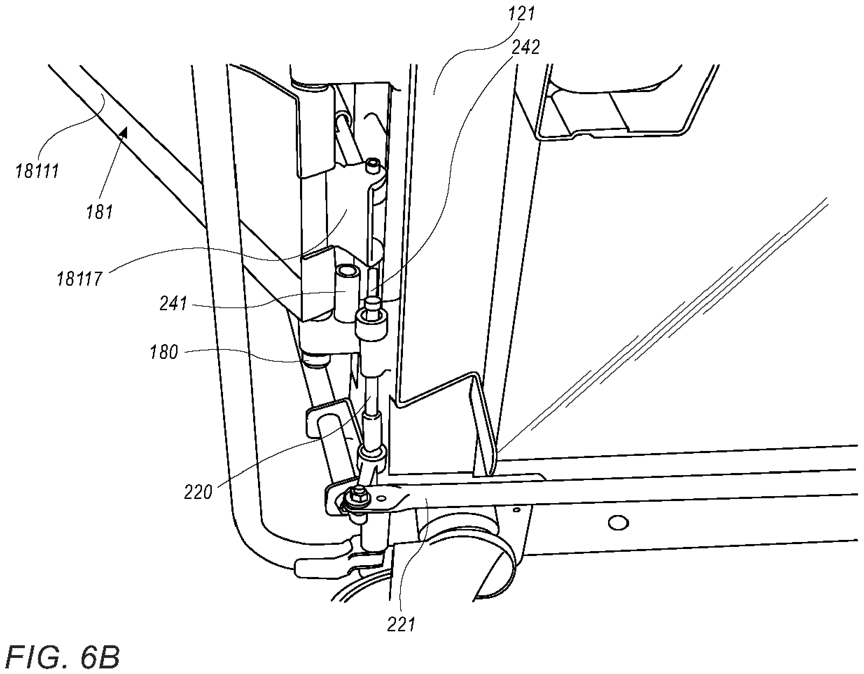

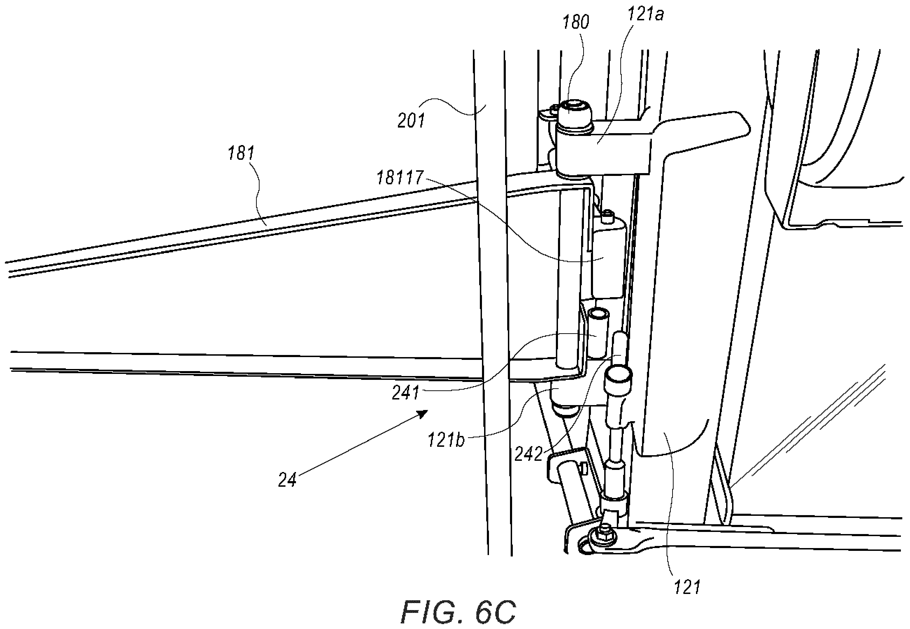

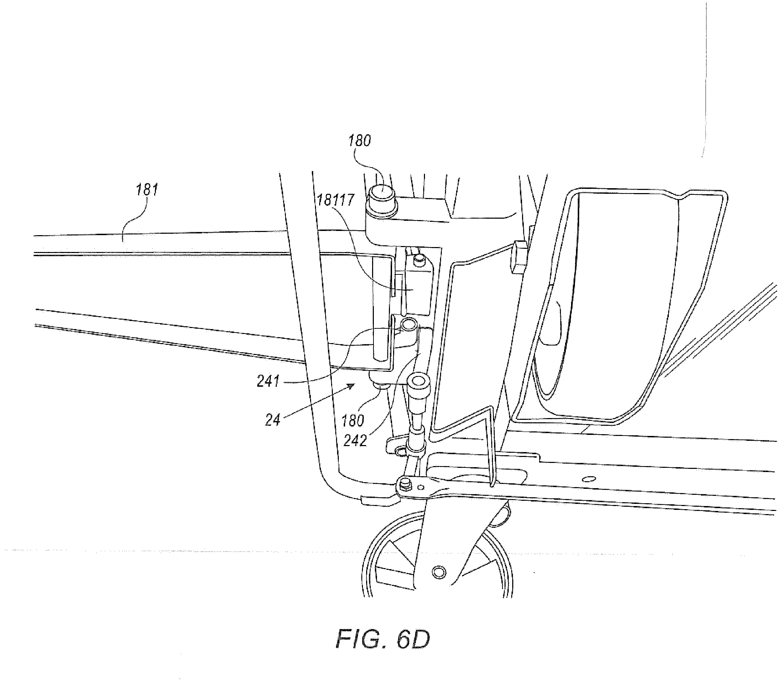

As can be seen from said figures, in an appreciably advantageous manner, said means 24 which are adapted to deactivate, and/or which are adapted to prevent the activation of said means 161 for braking said means, or wheels, 14, comprise means 241 for controlling the rotation of said actuation transversal rod 220 towards a condition, or angular position, of deactivation, as it is understood from the sequence of the Figs. 6A to 6C, and/or of maintenance of the same actuation transversal rod 220 in a condition or angular position of deactivation, as it is understood from Fig. 6D, of said means 161 for braking said means, or wheels, 14.

With appreciable advantage, as can be seen from said figures, said means 241 for controlling the rotation of said actuation transversal rod 220 towards a condition of deactivation of said means 161 for braking said means, or wheels, 14, and/or of prevention of the rotation of said actuation transversal rod 220 towards the activation position, are supported by, or integral with, said means 18 for coupling the trailer 10 to corresponding tow means, i.e., to said coupling bar, or rudder 18111.

Advantageously, as can be seen from said figures, said means 241 for controlling the rotation of said actuation transversal rod 220 towards a condition of deactivation of said means 161 for braking said means, or wheels, 14, and/or of prevention of the rotation of said actuation transversal rod 220 towards the activation position of said means 161 for braking said means, or wheels, 14, comprise an engagement and/or thrust projection 241, which is supported by, or integral with, said means 18 for coupling the trailer 10 to corresponding tow means, i.e., to said coupling bar, or rudder 18111.

As can be seen from said figures, with appreciable advantage, said engagement and/or thrust projection 241 extends posteriorly from the same means 181 for coupling the trailer 10 to a corresponding vehicle or tow means, i.e., from said coupling bar, or rudder 18111, in particular from the rear edge or end thereof.

With advantage, as can be seen from said figures, said engagement and/or thrust projection 241 is arranged next to said rear protrusion 18117 for the connection of said means 185 which are adapted to normally push the same coupling means 181 into said, in particular lifted, position, disengaged from said vehicle or tow means.

Advantageously, as can be seen from said figures, said means 24 which are adapted to deactivate and/or which are adapted to prevent the activation of said means 161 for braking said means, or wheels, 14, comprise means, or a lever, 242 which are, or is, integral with said actuation transversal rod 220.

As can be seen from said figures, with advantage, said means 241 for controlling the rotation of said actuation transversal rod 220 towards a condition of deactivation of said means 161 for braking said means, or wheels, 14, and/or of prevention of the rotation of said actuation transversal rod 220 towards the activation position of said means 161 for braking said means, or wheels, 14, interact, or engage, with corresponding means, or lever, 242 which radially project, or projects, from said actuation transversal rod 220, so as to push said actuation transversal rod 220 towards a condition, or angular position, of deactivation, and/or of maintenance of the same actuation transversal rod 220 in a condition or angular position of deactivation of said means 161 for braking said means, or wheels, 14, i.e., to prevent the retroverted rotation thereof.

In an advantageous manner, as can be seen from said figures, means 26 for gripping and towing said trailer 10 by an operator in charge are provided for.

Advantageously, as can be seen from said figures, said means 26 for gripping and towing said trailer 10 by an operator in charge are integral with said support means, or frame 12, and extend upwardly, preferably at said front side 121 of the trailer 10.

As can be seen from said figures, in an advantageous manner, said means 26 for gripping and towing said trailer 10 by an operator in charge comprise a pair of side struts 261, 262 connected by an upper cross-beam 263, and in particular, in a height position that is intermediate thereto, also by said lifted transversal member 126 for the attachment of said means 185 which are adapted to normally push the same coupling means 181 into said, in particular lifted, position, disengaged from said vehicle or tow means.

In a particularly advantageous manner, not particularly illustrated in the attached figures, means for supporting corresponding products, items or parcels defining respective housing seats for one or more of these corresponding products, items or parcels are provided for on the present trailer.

Advantageously, as can be seen from the same figures, said resting and support surface 120 defined by said support means, or frame 12 is in the form of a planar and preferably horizontal surface, in use, in particular onto which said products, items or parcels are rested or retained, i.e., said means for supporting corresponding products, items or parcels and/or respective housing seats for one or more of these corresponding products, items or parcels.

In practice, as is clear, the technical characteristics illustrated above allow, singularly or in a respective combination, achieving one or more of the following advantageous results:
- it is avoided to tow a trailer which inadvertently has blocked wheels, with resulting sliding thereof on the resting and running surface, and consequent wearing of said wheels and corresponding need to replace them prematurely, and the relative damage to those companies that use the same trailer;
- the operation to activate and deactivate the brake is made particularly easy to the operator;
- an essential solution that needs a limited number of components and a minimal construction cost is achieved.

The present invention is susceptible of obvious industrial application. Furthermore, those skilled in the art will be able to devise a number of modifications and/or variations to be made to the same invention, while remaining within the scope of the inventive concept, as widely explained. Furthermore, those skilled in the art will be able to devise further preferred implementations of the invention, which comprise one or more of the characteristics illustrated above of the preferred implementation referred to above, in particular, as set forth in the attached claims. Furthermore, it shall also be understood that all the details of the invention can be replaced by technically equivalent elements.

## Claims

1. A transport trailer (10), in particular of products, items or parcels, especially usable inside industrial, logistics settings and/or settings for the transfer of parcels, such as airports or the like; comprising support means, or frame (12), front and rear means, or wheels (14), respectively, for sliding said trailer on a corresponding resting and running surface of the same trailer, in particular said sliding means, or wheels, comprising at least one pair of front wheels (141, 141) and a pair of rear wheels (142, 142), means (16) for the connection between said sliding means, or wheels, (14) and said support means, or frame (12), in particular adapted to allow the same sliding means, or wheels, (14) to swivel, or freely rotate, with respect to a corresponding, especially vertical, axis and preferably including means (161), which can be activated and deactivated, for braking said means, or wheels (14), i.e., for blocking the rotation thereof on, or with respect to, the resting and running surface and means (18) for towing said trailer (10); the trailer (10) being **characterized in that** means (18) for towing said trailer (10) include corresponding means (181) for coupling the trailer (10) to a corresponding vehicle or tow means; said means (181) for coupling the trailer (10) to a corresponding vehicle or tow means being movable between a position, in particular a lifted position, for the disengagement from said vehicle or tow means and a position, in particular a lowered position, for the engagement and coupling with said vehicle or tow means; and **in that** said means (181) for coupling the trailer (10) to a corresponding vehicle or tow means are operatively connected to said means (161) for braking said means, or wheels (14), so that in the respective, in particular lowered, position for the engagement and coupling with said tow vehicle, they deactivate, and/or which are adapted to prevent the activation of, the same means (161) for braking said means, or wheels (14).

2. The trailer according to claim 1, **characterized in that** said means (181) for coupling the trailer (10) to a corresponding vehicle or tow means are adapted to allow the activation of the same means (161) for braking said means, or wheels (14), i.e., are operatively connected to said means (161) for braking said means, or wheels (14), so that, in the respective, in particular lifted, position for the disengagement from said vehicle or tow means, they allow the activation of the same means (161) for braking said means, or wheels (14).

3. The trailer according to any of the preceding claims, **characterized in that** said support means, or frame (12) define, or defines, a resting and support surface (120), in particular for said products, items and/or parcels, and/or comprise, or comprises, a front cross-beam (121), a rear cross-beam (122), and a first and a second longitudinally extending side spars (123, 124), between which said front and rear cross-beams extend (121, 122), and especially to which they are joined, preferentially welded.

4. The trailer according to any of the preceding claims, **characterized in that** said means (181) for coupling the trailer (10) to a corresponding vehicle or tow means are connected in a tilting, or rotatable, manner, to said support means, or frame (12), in particular to said front cross-beam (121) thereof, and are rotatable with respect to a corresponding transversal, or horizontal, shaft, (180), especially supported by corresponding projecting portions (121a, 121b) extending anteriorly from said front cross-beam (121) of said support means, or frame (12).

5. The trailer according to any of the preceding claims, **characterized in that** said means (181) for coupling the trailer (10) to a corresponding vehicle or tow means are in the form of a corresponding coupling bar, or rudder (18111), in particular having an end (181ya) hinged to said support means, or frame (12) and a free end (181yb), preferably at which means for the coupling to the corresponding vehicle or tow means are provided, in particular in the form of a loop, or hole, especially perpendicularly through, (182), and preferentially adapted to the insertion on a corresponding pin (1220), which is preferably projecting inferiorly from said rear cross-beam (122) of the corresponding trailer (10), i.e., of another vehicle or tow means.

6. The trailer according to any of the preceding claims, **characterized in that** said means (18) for coupling the trailer (10) to corresponding tow means, or to said coupling bar, or rudder (18111), have, or has, a transversal seat (18113) of insertion for said transversal, or horizontal, rotation shaft (180), which said transversal seat (18113) is in the proximity of the edge or rear end (181ya) of the same coupling bar, or rudder (18111).

7. The trailer according to any of the preceding claims or according to the pre-characterizing part of claim 1, **characterized in that** said means (18) for coupling the trailer (10) to corresponding tow means comprise means (185) which are adapted to normally push the same coupling means (181) to said, in particular lifted, position, disengaged from said vehicle or tow means.

8. The trailer according to claim 7, **characterized in that** said means (185) which are adapted to normally push the same coupling means (181) to said, in particular lifted, position, disengaged from said vehicle or tow means, are in the form of means that exert an elastic thrust and preferably comprise a first and a second elastic members, in particular transversally placed side by side to one another, especially in the form of gas spring means, i.e., in the form of a first and a second gas springs (185, 185), in particular transversally placed side by side to one another.

9. The trailer according to any of the preceding claims 7 and 8, **characterized in that** said means (185) which are adapted to normally push the same coupling means (181) to said, in particular lifted, position, disengaged from said vehicle or tow means, extend between said means (181) for coupling the trailer (10) to a corresponding vehicle or tow means and said support means, or frame (12), in particular between a rear protrusion (18117) of said means (181) for coupling the trailer (10) to a corresponding vehicle or tow means, i.e., of said coupling bar, or rudder (18111), and a transversal member (126), in particular vertically lifted with respect to the resting and support surface (120), of said support means, or frame (12).

10. The trailer according to claim 9, **characterized in that** said rear protrusion (18117) of said means (181) for coupling the trailer (10) to a corresponding vehicle or tow means is freely movable in the space between said rear end (181ya) of said means (18) for coupling the trailer (10) to corresponding tow means, i.e., of said coupling bar, or rudder (18111), and the front face of said support means, or frame (12), i.e., of said front cross-beam (121) thereof.

11. The trailer according to any of the preceding claims or according to the pre-characterizing part of claim 1, **characterized in that** means (20) for activating and/or deactivating the brake of the wheels (14) are provided for.

12. The trailer according to claim 11, **characterized in that** said means (20) for activating and/or deactivating the brake of the wheels (14) act onto said pair of front wheels (141, 141), and in particular also onto said pair of rear wheels (142, 142).

13. The trailer according to any of the preceding claims 11 and 12, **characterized in that** said means (20) for activating and/or deactivating the brake of the wheels (14) comprise a transversal bar (201), of engagement for the operator's foot, which extends between said pair of front wheels (141, 141), and preferably which substantially has the same width as said trailer (10).

14. The trailer according to any of the preceding claims 11 to 13, **characterized in that** said transversal bar (201) is at said front side (121) of said trailer (10).

15. The trailer according to any of the preceding claims 11 to 14, **characterized in that** said transversal bar (201), of engagement for the operator's foot, is rotatably supported by the corresponding front wheels (141, 141) and interacts with said braking means (161) thereof.

16. The trailer according to any of the preceding claims 11 to 15, **characterized in that** said transversal bar (201), of engagement for the operator's foot, has an elongated engagement portion (20121), from the ends of which (20123, 20123) corresponding, in particular perpendicular or substantially perpendicular, portions for a rotatable connection to the corresponding front wheels (141, 141) extend, which interact with, or fit into, the means for actuating said means (161) for braking said means, or wheels (14).

17. The trailer according to any of the preceding claims 11 to 16, **characterized in that** said means (20) for activating and/or deactivating the brake of the wheels (14) comprise means (22) for transmitting the action which activates or deactivates the braking, from said pair of front wheels (141, 141) to said pair of rear wheels (142, 142).

18. The trailer according to claim 17, **characterized in that** said means (22) for transmitting the action which activates or deactivates the braking, from said pair of front wheels (141, 141) to said pair of rear wheels (142, 142), comprise a connecting rod (221), in particular longitudinally extending, preferably extending below said surface (120) for resting and supporting said support means, or frame (12).

19. The trailer according to claim 18, **characterized in that** said connecting rod (221) rotates, and preferably is supported by, in particular inferiorly located to, a corresponding transversal rod (222), with fits with said means (16) for the connection between said sliding means, or wheels (14) and said support means, or frame (12), of said pair of rear wheels (142, 142), and which is adapted to actuate the braking means (161) of the same rear wheels (142, 142).

20. The trailer according to any of the preceding claims 18 and 19, **characterized in that** said means (22) for transmitting the action which activates or deactivates the braking, from said pair of front wheels (141, 141), to said pair of rear wheels (142, 142), comprise operative connection means of said transversal bar (201), of engagement for the operator's foot, with said connecting rod (221).

21. The trailer according to any of the preceding claims 18 to 20, **characterized in that** said means (22) for transmitting the action which activates or deactivates the braking, from said pair of front wheels (141, 141) to said pair of rear wheels (142, 142), comprise an actuation transversal rod (220), in particular for handling said connecting rod (221), which connecting rod (221) is preferably is supported by, in particular inferiorly located to, this same actuation transversal rod (220).

22. The trailer according to any of the preceding claims 18 to 21, **characterized in that** said means (22) for transmitting the action which activates or deactivates the braking, from said pair of front wheels (141, 141) to said pair of rear wheels (142, 142), comprise an actuation transversal rod (220) exiting one, i.e., both means (16), for the connection between said sliding means, or wheels (14) and said support means, or frame (12), of said pair of front wheels (141, 141), which said actuation transversal rod (220) is operatively connected, through said means (161) for braking said means, or wheels (14), with said transversal bar (201), of engagement for the operator's foot, so as to rotate and transmit, in particular through said connecting rod (221), the activation and deactivation of the braking action to said means (161) for braking said means, or wheels (14) of said pair of rear wheels (142, 142).

23. The trailer according to claim 22, **characterized in that** said actuation transversal rod (220) is rotatably supported by at least one corresponding protrusion (18117) of said support means, or frame (12), which supports in a freely rotatable manner said means (18) for coupling the trailer (10) to corresponding tow means, i.e., which supports in a freely rotatable manner said coupling bar, or rudder (18111).

24. The trailer according to any of the preceding claims 21 and 22, **characterized in that** said means (181) for coupling the trailer (10) to corresponding tow means are hinged to said support means, or frame (12) in a front position with respect to said actuation transversal rod (220).

25. The trailer according to any of the preceding claims or according to the pre-characterizing part of claim 1, **characterized in that** means (24) which are adapted to deactivate and/or which are adapted to prevent the activation of said means (161) for braking said means, or wheels (14) are provided for.

26. The trailer according to claim 25, **characterized in that** said means (24) which are adapted to deactivate, and/or which are adapted to prevent the activation of, said means (161) for braking said means, or wheels (14), comprise means (241) for controlling, and/or maintaining, the deactivation of said means (161) for braking said means, or wheels (14).

27. The trailer according to claim 26, **characterized in that** said means (24) which are adapted to deactivate, and/or which are adapted to prevent the activation of, said means (161) for braking said means, or wheels (14), comprise means (241) for controlling the rotation of said actuation transversal rod (220) towards a condition, or angular position, of deactivation, and/or of maintenance of the same actuation transversal rod (220) in a condition or angular position of deactivation of said means (161) for braking said means, or wheels (14).

28. The trailer according to claim 27, **characterized in that** said means (241) for controlling the rotation of said actuation transversal rod (220) towards a condition of deactivation of said means (161) for braking said means, or wheels (14), and/or of prevention of the rotation of said actuation transversal rod (220) towards the activation position are supported by, or integral with, said means (18) for coupling the trailer (10) to corresponding tow means, i.e., to said coupling bar, or rudder (18111).

29. The trailer according to any of the preceding claims 27 and 28, **characterized in that** said means (241) for controlling the rotation of said actuation transversal rod (220) towards a condition of deactivation of said means (161) for braking said means, or wheels (14), and/or of prevention of the rotation of said actuation transversal rod (220) towards the activation position of said means (161) for braking said means, or wheels (14), comprise an engagement and/or thrust projection (241), which is supported by, or integral with, said means (18) for coupling the trailer (10) to corresponding tow means, i.e., to said coupling bar, or rudder (18111).

30. The trailer according to claim 29, **characterized in that** said engagement and/or thrust projection (241) extends posteriorly from the same means (181) for coupling the trailer (10) to a corresponding vehicle or tow means, i.e., from said coupling bar, or rudder (18111), in particular from the rear edge or end thereof.

31. The trailer according to any of the preceding claims 29 and 30, **characterized in that** said engagement and/or thrust projection (241) is arranged next to said rear protrusion (18117) for the connection of said means (185) which are adapted to normally push the same coupling means (181) into said, in particular lifted, position, disengaged from said vehicle or tow means.

32. The trailer according to any of the preceding claims 25 to 31, **characterized in that** said means (24) which are adapted to deactivate and/or which are adapted to prevent the activation of said means (161) for braking said means, or wheels (14), comprise means, or a lever, (242) which are, or is, integral with said actuation transversal rod (220).

33. The trailer according to any of the preceding claims 27 to 32, **characterized in that** said means (241) for controlling the rotation of said actuation transversal rod (220) towards a condition of deactivation of said means (161) for braking said means, or wheels (14), and/or of prevention of the rotation of said actuation transversal rod (220) towards the activation position of said means (161) for braking said means, or wheels (14), interact, or engage, with corresponding means, or lever, (242) which radially project, or projects, from said actuation transversal rod (220), so as to push said actuation transversal rod (220) towards a condition, or angular position, of deactivation, and/or of maintenance of the same actuation transversal rod (220) in a condition or angular position of deactivation of said means (161) for braking said means, or wheels (14).

34. The trailer according to any of the preceding claims or according to the pre-characterizing part of claim 1, **characterized in that** means (26) for gripping and towing said trailer (10) by an operator in charge are provided for.

35. The trailer according to claim 34, **characterized in that** said means (26) for gripping and towing said trailer (10) by an operator in charge are integral with said support means, or frame (12), and extend upwardly, preferably at said front side (121) of the trailer (10).

36. The trailer according to any of the preceding claims 34 and 35, **characterized in that** said means (26) for gripping and towing said trailer (10) by an operator in charge comprise a pair of side struts (261, 262) connected by an upper cross-beam (263), and in particular, in a height position that is intermediate thereto, also by said lifted transversal member (126) for the attachment of said means (185) which are adapted to normally push the same coupling means (181) into said, in particular lifted, position, disengaged from said vehicle or tow means.

37. The trailer according to any of the preceding claims or according to the pre-characterizing part of claim 1, **characterized in that** means for supporting corresponding products, items or parcels defining respective housing seats for one or more of these corresponding products, items or parcels are provided for.

38. The trailer according to any of the preceding claims, **characterized in that** said resting and support surface (120) defined by said support means, or frame (12) is in the form of a planar and preferably horizontal surface, in use, in particular onto which said products, items or parcels, i.e., said means for supporting corresponding products, items or parcels and/or respective housing seats for one or more of these corresponding products, items or parcels are rested or retained.

39. The trailer respectively **characterized in that** it is made according to any of the preceding claims and/or as described and illustrated with reference to the attached drawings.
